# EUROPÄISCHE PATENTSCHRIFT

(11) **EP 0 522 272 B1**
(45) Veröffentlichungstag und Bekanntmachung des Hinweises auf die Patenterteilung: **15.11.1995**
(21) Anmeldenummer: 92108823.3
(22) Anmeldetag: 26.05.1992
(51) Int. Cl.: B23G 1/36, B24B 19/02, B24B 27/00

(54) **Gewindeschleifmaschine mit einer auf einem Schleiftisch angeordneten Schleifeinheit für profilerzeugene Schleifoperationen**
Threadgrinding machine with a grinding unit mounted on the grinding table for profile grinding operations
Machine à retifier des filet avec l'unité de retification montée sur les tables de retification pour des opérations de retification profile

(30) Priorität: 12.07.1991 DE 4123045
(43) Veröffentlichungstag der Anmeldung: 13.01.1993
(73) Patentinhaber: Buderus Schleiftechnik GmbH, D-35607 Asslar (DE)
(72) Erfinder: Schreiber, Jürgen, W-6330 Wetzlar (DE)

(56) Entgegenhaltungen:
- EP-A- 0 072 887
- GB-A- 6 119
- GB-A- 2 163 683

## Beschreibung

Die Erfindung betrifft eine Gewindeschleifmaschine mit einer auf einem verfahrbaren Hubschlitten angeordneten Schleifeinheit für eine profilerzeugende Schleifoperation, wie das Schleifen von Gewinden, Kugelrollenspindeln, Schnecken, Fräsern dgl; siehe GB-A 2 163 683.
Bei den bisher bekannten Schleifmaschinen dieser Bautypen ist es nicht möglich, neben der profilerzeugenden Schleifoperation in einer Aufspannung weitere Schleifoperationen wie z. B. das Schleifen von Außendurchmessern, von rechten oder linken Anlageschultern, von Fasen, Befestigungsgewinden, kegelförmigen Schäften oder dgl. durchzuführen.
Der Erfindung liegt die Aufgabe zugrunde, auf einer solchen bekannten Schleifmaschine neben den typischen Aufgaben einer Gewindeschleifmaschine auch weitere Schleifoperationen wie eine Endenbearbeitung von Außendurchmessern, Anlageschultern, Ein- oder Freistichen, Befestigungsgewinden u.s.w. in einer Aufspannung durchführen zu können.
Zur Lösung dieser Aufgabe werden erfindungsgemäß die im Patentanspruch 1 angegebenen Merkmale vorgeschlagen.

Die zusätzliche Schleifeinheit wirkt sich günstig auf die Verringerung von Rüst- und Nebenzeiten aus, bei gleichzeitiger Optimierung der Lagetoleranzen.

In der Zeichnung ist die Erfindung an Ausführungsbeispielen dargestellt. Es zeigen
- Fig. 1: eine Gewindeschleifmaschine in Draufsicht mit einer zusätzlichen Außenschleifeinheit.
- Fig. 2: eine Gewindeschleifmaschine mit einer zusätzlichen Einstechgewindeschleifeinrichtung.
- Fig. 3: eine Kombination der Ausführungen gemäß fig. 1 und Fig. 2 in Form einer zusätzlichen Schleifeinheit mit zwei Schleifscheiben.

Auf dem Schleifmaschinenbett 1 ist der das Werkstück mit dem Werkstückspindelkasten 2 und dem Reitstock 3 aufnehmende quer verfahrbare Schlitten 4 in üblicher WEise angeordnet. Dem Schlitten 4 gegenüber ist die Schleifeinheit 7 mit der Gewindeschleifscheibe 6 angeordnet. Die Verstellmöglichkeiten sind durch Pfeile angedeutet. Durch die richtige Zustellung der Gewindeschleifscheibe 6 und die entsprechende Steuerung des mit dem Werkstück bestückten Schlittens 4, indem dieser in Pfeilrichtung an der Schleifscheibe 6 entlang geführt wird, kann auf die übliche Weise das Werkstück außen mit dem gewünschten Profil versehen werden.

Auf einem gemeinsamen Hubschlitten 5 ist neben der Schleifeinheit 7 für die profilerzeugende Schleifoperation, eine zusätzliche Schleifeinheit 8 mit einer Schleifscheibe 9 für das Außenrundschleifen des Werkstückes angeordnet. Diese zusätzliche Schleifeinheit 8 kann so zum Werkstück hin zugestellt werden -während die Schleifeinheit 7 entsprechend verfahren wird- daß die gewünschte Außenrundschleifoperationen durchgeführt werden, indem der Schlitten 4 mit dem Werkstück an der Schleifscheibe 9 vorbeifährt.

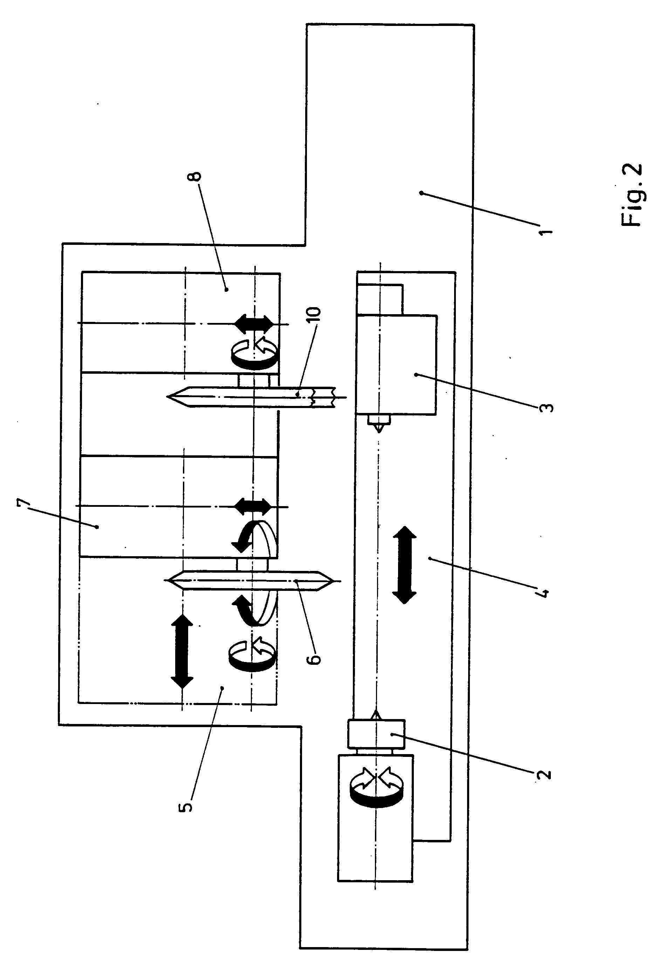

In Fig. 2 ist ein Ausführungsbeispiel gezeigt, bei welchem die zusätzliche Schleifeinheit 8 eine Schleifscheibe 10 für Einstechgewindeschleifen trägt.

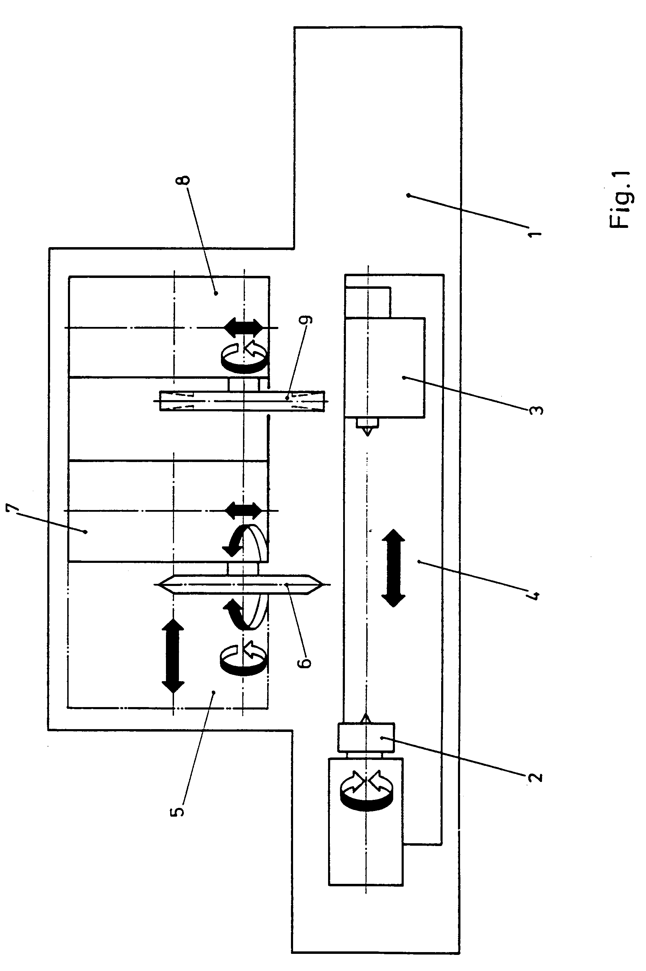

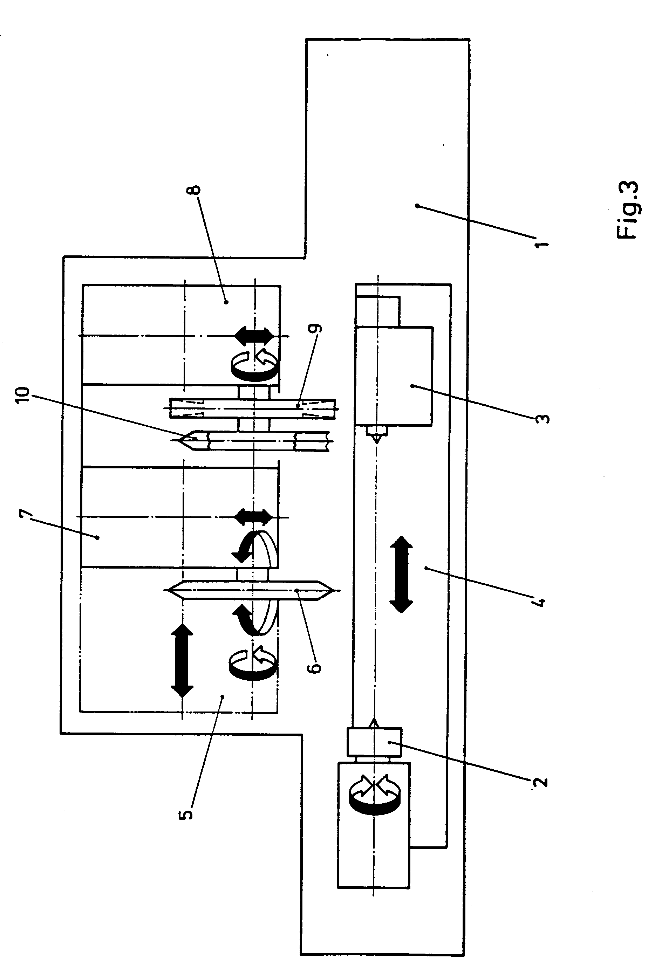

Die Fig. 3 deutet die Möglichkeit an, daß die zusätzliche Schleifeinheit auch mit mehr als einer Schleifscheibe bestückt werden kann. Im vorliegenden Falle trägt sie die beiden Schleifscheiben für eine Außenrundschleifoperation (9) und andererseits Einstechgewindeschleifoperation (10) als Kombination der Ausführungsbeispiele Fig. 1 und Fig. 2.

Die Anordnung der Schleifeinheiten auf dem zusätzlichen Hubschlitten 7 erlaubt es die Schleifeinheiten wahlweise und schnell in Arbeitsstellung zu bringen. Die Eilverstellung kann hydraulisch oder als NC-Achse erfolgen. Ein weiterer wesentlicher Vorteil des zusätzlichen gemeinsamen Hubschlittens 7 besteht darin, daß die Schleiftischführung nur für die eigentliche Schleifoperationen verwendet werden, was die Erwärmung der Maschine erheblich vermindert und damit die Schleifgenauigkeit erhöht. Der zusätzliche Hubschlitten hat keinen negativen Einfluß auf die Schleifgenauigkeit, da er während des eigentlichen Schleifvorganges axial nicht bewegt wird und hydraulisch geklemmt ist.

## Patentansprüche

1. Gewindeschleifmaschine, mit einer auf einem verfahrbaren Hubschlitten (5) angeordneten Schleifeinheit (7), für eine profilerzeugende Schleifoperation, wie das Schleifen von Gewinden, Kugelrollspindeln, Schnecken, Fräsern und dgl., gekennzeichnet durch mindestens eine weitere, auf einem zusätzlichen verfahrbaren Schleiftisch angeordnete Schleifeinheit (8) für, neben den Schleifaufgaben einer Gewindeschleifmaschine, zusätzliche Schleifoperationen, wobei die Schleifeinheiten (7,8) auf dem gemeinsamen Hubschlitten (5) angeordnet sind.

2. Gewindeschleifmaschine nach Anspruch 1,
dadurch gekennzeichnet,
daß die zusätzliche Schleifeinheit (8) zum Herstellen von Befestigungsgewinden im Einstech- oder Einprofilschleifen vorgesehen ist.

3. Gewindeschleifmaschine nach Anspruch 1,
dadurch gekennzeichnet,
daß die zusätzliche Schleifeinheit (8) eine Einheit zur Durchführung von Außenrund- und Schulterschleifoperationen ist.

4. Gewindeschleifmaschine nach mindestens einem der Ansprüche 1 bis 3, dadurch gekennzeichnet,
daß die zusätzliche Schleifeinheit (8) mit mindestens zwei Schleifscheiben (9; 10) für unterschiedliche Schleifoperationen bestückt ist.

5. Gewindeschleifmaschine nach Anspruch 4,
dadurch gekennzeichnet,
daß mit den beiden Schleifscheiben einerseits Außenrundschleifoperationen und andererseits Gewindeschleifoperationen durchführbar sind.

6. Gewindeschleifmaschine nach Anspruch 1,
dadurch gekennzeichnet,
daß der die Schleifeinheiten (7; 8) aufnehmende Hubschlitten (5) wahlweise hydraulisch oder NC-gesteuert verfahrbar und klemmtbar ist.

## Claims

1. Thread grinding machine provided with a grinding unit (7) located on a mobile lifting sled (5) for a profile producing grinding operation, such as the grinding of threads, ball bearing spindles, worms, milling cutters etc., characterised in that at least a further grinding unit (8) is located on an additional travelling grinding table for additional grinding operations, besides the grinding purpose of a thread grinding machine; the grinding units (7 8) are together placed on the common lifting sled (5).

2. Thread grinding machine according to claim 1, characterised in that the additional grinding unit (8) is intended for producing fastening threads through plunging grinding or single profile grinding.

3. Thread grinding machine according to claim 1, characterised in that the additional grinding unit (8) is a unit to perform cylindrical grinding and shoulder grinding operations.

4. Thread grinding machine according to at least one of the claims 1 to 3, characterised in that the additional grinding unit (8) is equipped with two grinding wheels (9; 10) for various grinding operations.

5. Thread grinding machine according to claim 4, characterised in that with both grinding wheels cylindrical grinding operations as well as thread grinding operations are performed.

6. Thread grinding machine according to claim 1, characterised in that the lifting sled (5) for the grinding units (7; 8) is optionally hydraulically displaced or NC controlled displaced and that it can be clamped.

## Revendications

1. Machine à rectifier les filets dotée d'une unité à rectifier (7) et placée sur un chariot élevateur (5) amovible pour opérations à produir des profils telles comme rectifications de filets, vis à billes, vis sans fin, fraises etc., est caractérisée par le fait qu'au moins encore une unité de rectification (8), placée sur une table amovible de rectification aditionnelle, est utilisée pour opérations de rectification d'une machine à rectifier les filets et opérations de rectification aditionnelles; les unités de rectification (7, 8) sont placées sur un chariot élevateur (5) commun.

2. Machine à rectifier les filets selon revendication 1, est caractérisée par le fait que l'unité aditionnelle (8) est pourvue pour la production de filets de fixation par l'intermédiaire de la rectification en plongée ou rectification des monoprofils.

3. Machine à rectifier les filets selon revendication 1, est caractérisée par le fait que l'unité aditionnelle (8) est un appareil à rectifier les surfaces de révolution extérieures et à rectifier à épaulement.

4. Machine à rectifier les filets selon au moins d'une des revendications 1 à 3, est caractérisée par le fait que l'unité aditionnelle (8) est dotée au moins de deux meules (9; 10) pour opérations de rectification différentes.

5. Machine à rectifier les filets selon le revendications 4, est caractérisée par le fait qu'on peut rectifier les surfaces de révolution extérieures, mais aussi rectifier les filets.

6. Machine à rectifier les filets selon revendication 1, est caractérisée par le fait que le chariot élévateur (5) pour les unités (7; 8) est déplacable hydrauliquement ou en commande numérique et qu'il peut être serré.
